(19) Europäisches Patentamt

European Patent Office

Office européen des brevets

(11) EP 0 887 532 B1

(12) **EUROPEAN PATENT SPECIFICATION**

(45) Date of publication and mention
of the grant of the patent:
**17.08.2005 Bulletin 2005/33**

(51) Int Cl.⁷: **F02D 21/08**, F02D 43/00

(21) Application number: **98111865.6**

(22) Date of filing: **26.06.1998**

(54) **Control apparatus of intake air control valve for an internal combustion engine**

Steuervorrichtung für die Drosselklappe einer Brennkraftmaschine

Dispositif de commande pour papillon d'admission d'air de moteur à combustion interne

(84) Designated Contracting States:
**BE DE ES FR GB IT**

(30) Priority: **26.06.1997 JP 17056297**

(43) Date of publication of application:
**30.12.1998 Bulletin 1998/53**

(73) Proprietor: **Toyota Jidosha Kabushiki Kaisha**
**Toyota-shi, Aichi-ken 471-8571 (JP)**

(72) Inventor: **Kizaki, Mikio**
**Toyota-shi, Aichi-ken, 471-8571 (JP)**

(74) Representative: **TBK-Patent**
**Bavariaring 4-6**
**80336 München (DE)**

(56) References cited:
**EP-A- 0 473 931           US-A- 5 524 591**

• **PATENT ABSTRACTS OF JAPAN vol. 1996, no.
12, 26 December 1996 (1996-12-26) & JP 08
210195 A (NISSAN MOTOR CO LTD), 20 August
1996 (1996-08-20) -& JP 08 210195 A (NISSAN) 20
August 1996 (1996-08-20)**
• **PATENT ABSTRACTS OF JAPAN vol. 008, no.
224 (M-331), 13 October 1984 (1984-10-13) & JP
59 105955 A (MAZDA KK), 19 June 1984
(1984-06-19)**

**Description**

BACKGROUND OF THE INVENTION

1. Field of the Invention

The present invention relates to an intake throttle valve control apparatus for an internal combustion engine with EGR (exhaust gas recirculation) control and, more specifically, relates to an apparatus for performing cooperative control of an intake throttle valve and an EGR valve.

2. Description of the Related Art

According to an earlier art, an intake throttle valve control apparatus excessively or insufficiently performs EGR control in the case where there is a difference between a target EGR valve lift and an actual EGR valve lift due to response delays of an EGR valve in a transient control state. Therefore, the intake throttle valve control apparatus causes generation of smoke and an increase in $NO_x$ (nitrogen oxides). The intake throttle valve control apparatus according to the earlier art excessively or insufficiently performs EGR control also in the case where there is a difference between a target opening degree and an actual opening degree of the intake throttle valve. While excessive EGR control causes generation of smoke, insufficient EGR control causes an increase in $NO_x$ (nitrogen oxides).

Further, an internal combustion engine having an intake pressure sensor according to an earlier art determines a maximum fuel injection amount in consideration of an inner pressure of an intake pipe. However, since a precise value of the inner pressure of the intake pipe cannot be obtained during a response time period of a pressure sensor, the maximum fuel injection amount may not suitably be determined. In this state, there arises a difference between an actual opening degree and a target opening degree of the intake throttle valve. For example, if the intake throttle valve tends to be closed and the amount of intake air decreases, it becomes impossible to suitably set a fuel injection amount based on the inner pressure of the intake pipe. As a result, smoke is generated.

Still further, Japanese Patent Application Laid-Open No. HEI 5-44507 discloses a conventional intake bypass passage equipped with a bypass valve for bypassing an intake passage equipped with an intake throttle valve. This conventional art makes it possible to overcome a shortage of intake air by opening the bypass intake passage at the time of abrupt acceleration.

However, the intake bypass passage according to the conventional art as disclosed in the aforementioned patent publication needs to be equipped with a bypass intake passage and a bypass valve in order to ensure a sufficient amount of intake air at the time of abrupt acceleration.

Furthermore, from JP-082 101 95 an intake throttle valve apparatus according to the preamble of the patent claim 1 is known.

SUMMARY OF THE INVENTION

The present invention has been devised to solve the aforementioned problems. It is thus an object of the present invention to provide an intake throttle valve control apparatus for an internal combustion engine with EGR control that is capable of performing cooperative control of an intake throttle valve and an EGR valve in an internal combustion engine with intake throttle valve control.

The above object is solved by combination of features of the independent claim, the dependent claims disclose further advantageous embodiments of the invention.

That is, it is possible to perform cooperative control by relating intake throttle valve control and EGR valve control with each other. It is thus possible to improve an amount of smoke generated, a state of combustion and drivability.

In the present invention, the fuel injection amount in a full load state is determined based on a difference between an actual opening degree and a target opening degree of the intake throttle valve. Hence, it is possible to control a fuel injection amount in accordance with an opening degree of the intake throttle valve.

BRIEF DESCRIPTION OF THE DRAWINGS

Further objects, features and advantages of the present invention will become apparent from the following description of preferred embodiments with reference to the accompanying drawings, wherein:

Fig. 1 is an overall structural view of a diesel engine in which a step motor control apparatus according to the present invention is employed;

Fig. 2 is a block diagram illustrating the inside of an ECU 39 and various signals inputted thereto and outputted therefrom;

Fig. 3 illustrates a flowchart of a program for diesel intake throttle valve control and a two-dimensional map;

Fig. 4 illustrates a flowchart of a program for diesel intake throttle valve control;

Fig. 5 illustrates a flowchart of a program for EGR control and graphs showing relationships among various parameters used in steps of the program; and

Fig. 6 is a flowchart of a program used in the intake throttle valve control apparatus for an engine with EGR control according to the present invention.

## DESCRIPTION OF THE PREFERRED EMBODIMENT

A preferred embodiment of the present invention will now be described with reference to the accompanying drawings.

In the present specification, flags "ON" and "OFF" correspond to binary numbers "1"(true) and "0"(false) respectively. If a switch is turned "ON", it is brought into communication, whereas if the switch is turned "OFF", it is brought out of communication.

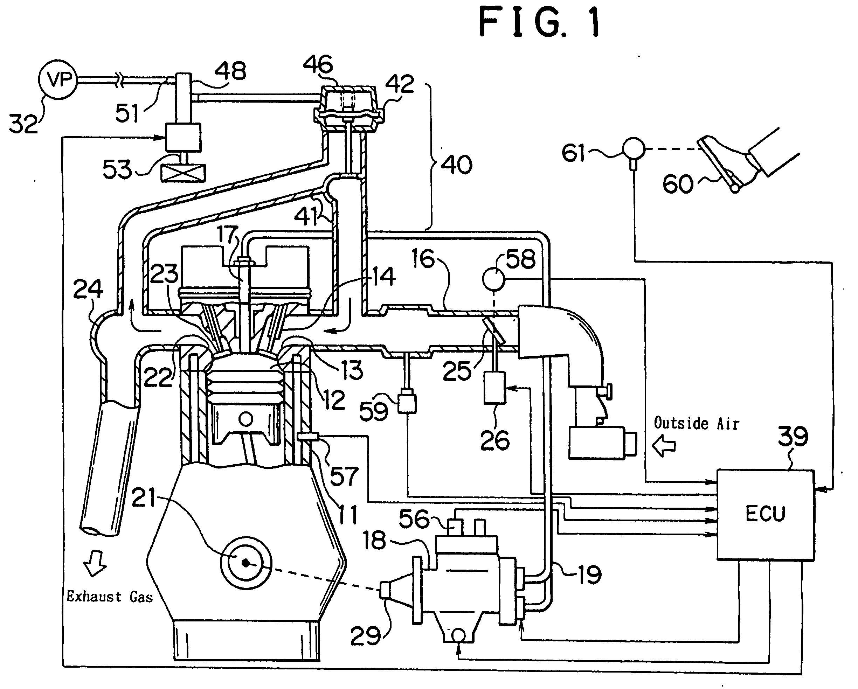

Fig. 1 is a schematic structural view illustrating a diesel engine to which a step motor control apparatus according to the present invention is applied. Although the following description will be centered on an exemplary case where the control apparatus according to the present invention is applied to an intake throttle valve for the diesel engine, the present invention is not limited to such a case.

A diesel engine (which will hereinafter be referred to as an "engine") 11 has cylinders each including a combustion chamber 12. During an intake stroke of the engine 11, an intake valve 14 opens an intake port 13 and thus introduces the outside air admitted into an intake passage 16 (intake air) into the combustion chamber 12. A fuel injection pump 18 forcibly feeds fuel into a fuel injection nozzle 17 via a fuel line 19. The fuel injection nozzle 17 injects fuel into the combustion chamber 12. During an exhaust stroke of the engine 11, an exhaust valve 23 opens an exhaust port 22 and thus discharges exhaust gas via an exhaust passage 24.

A step motor 26 drives an intake throttle valve 25 based on control signals from an electronic control unit 39 (which will hereinafter be referred to as an "ECU") so as to achieve a predetermined opening degree of the intake throttle valve 25. A full open switch 58 is turned ON when the intake throttle valve 25 assumes a full open position and it is turned OFF when the intake throttle valve 25 assumes other positions.

An EGR (exhaust gas recirculation) device 40 partially returns the exhaust gas discharged from the combustion chamber 12 into the exhaust passage 24 to the intake passage 16 and the combustion chamber 12. The EGR device 40 is equipped with an EGR passage 41 for partially causing exhaust gas to flow from the exhaust passage 24 to the intake passage 16 and an EGR valve 42 for adjusting an amount of exhaust gas flowing through the EGR passage 41 (amount of EGR).

The EGR valve 42 is a diaphragm valve that operates based on negative pressure and atmospheric pressure to open and close the EGR passage 41. The EGR device 40 is equipped with an electric vacuum regulating valve 48 (which will hereinafter be referred to as an "EVRV") for adjusting a negative pressure and an atmospheric pressure applied to a pressure chamber 46. The EVRV 48 is connected with a negative pressure port 51 and an atmospheric port 53 so as to adjust a negative pressure applied to the pressure chamber 46. The negative pressure port 51 is connected with a pump 32 and the atmospheric port 53 takes in atmospheric air. The ECU 39 controls a current flowing through the EVRV 48. By suitably controlling the EVRV 48 in accordance with operating states of the engine 11, the ECU 39 adjusts an opening degree of the EGR valve 42 and thus consecutively adjusts an amount of EGR.

A crank shaft 21 of the engine 11 causes a drive shaft 29 of the fuel injection pump 18 to rotate. A rotational speed sensor 56 disposed on the fuel injection pump 18 detects a rotational speed of the drive shaft 29 and thus detects a rotational speed of the crank shaft 21, that is, an engine revolution NE.

A coolant temperature sensor 57 disposed on the engine 11 detects a temperature THW of coolant for cooling the engine 11 and outputs an electric signal corresponding to the coolant temperature THW to the ECU 39. An intake pressure sensor 59 arranged in the intake passage 16 detects the intake pressure PM in the intake passage 16 and outputs an electrical signal corresponding to the intake pressure PM to the ECU 39. An acceleration sensor 61 disposed in the vicinity of an accelerator pedal 60 outputs an electric signal indicating an accelerator opening degree ACCP corresponding to a depressing stroke of the accelerator pedal 60 to the ECU 39.

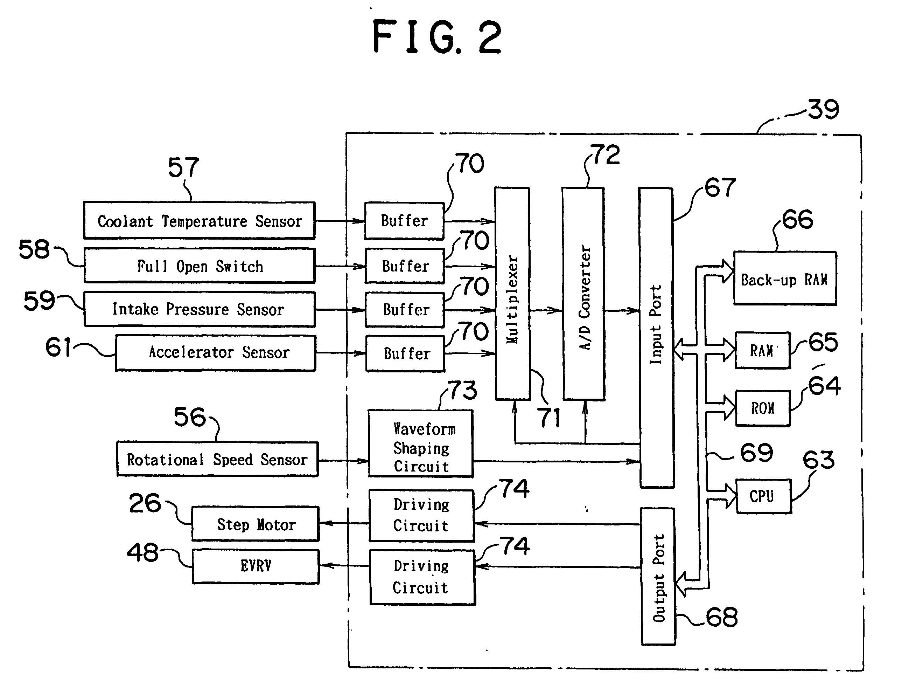

Fig. 2 is a block diagram illustrating the inside of the ECU 39 and various signals inputted thereto and outputted therefrom. The ECU 39 is typically composed of a central processing unit (CPU) 63, a read only memory (ROM) 64, a random access memory (RAM) 65, a back up RAM 66, an input port 67, an output port 68, an inner bus 69, buffers 70, a multiplexer 71, an A/D converter 72, a waveform shaping circuit 73 and driving circuits 74. The electric signals outputted from the sensors 57, 58, 59 and 61 are supplied to the A/D converter 72 through the buffers 70 and the multiplexer 71, converted therein into digital signals, and inputted to the input port 67. The waveform shaping circuit 73 subjects an electric signal outputted from the sensor 56 to a waveform shaping process, and the electric signal is thereafter inputted to the input port 67. The electric signals for driving the step motor 26 and the EVRV 48 are supplied to the driving circuits 74 through the output port 68. The electric signals thus supplied to the driving circuits 74 are subjected to a necessary amplification process and outputted to the step motor 26 and the EVRV 48. The input port 67 and the output port 68 are connected with the CPU 63, the ROM 64, the RAM 65 and the back up RAM 66 via the inner bus 69. For example, a control program stored in the ROM 64 is designed to process parameters that are indicated by electric signals inputted to the ECU 39 and thus performs diesel intake throttle valve control and EGR control.

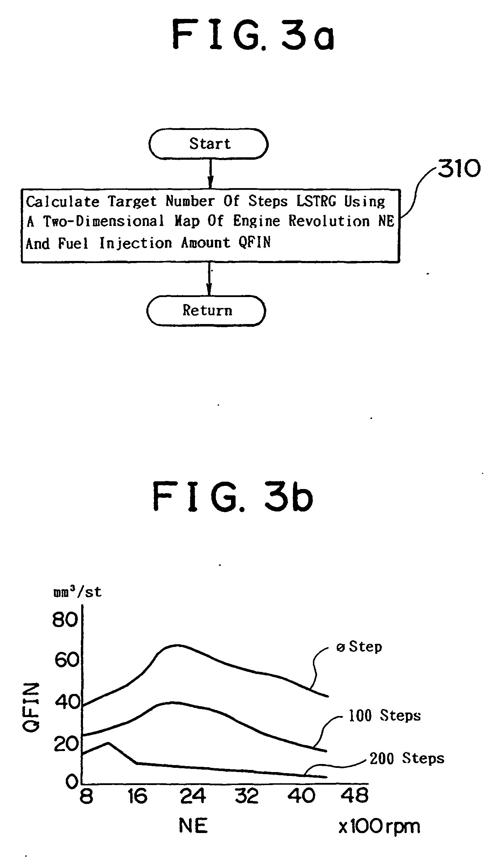

Exemplary outlines of diesel intake throttle valve control and EGR control will now be described with reference to Figs. 3 through 5.

Fig. 3a illustrates a flowchart of a program for diesel intake throttle valve control and Fig. 3b is a two-dimensional map used in step 310. The program as illustrated in Fig. 3 is carried out, for instance, every 8ms.

In step 310, a target number of steps LSTRG that indicates a target opening degree of the diesel intake throttle valve is calculated from an engine revolution NE and a final fuel injection amount QFIN using the two-dimensional map as illustrated in Fig. 3b, which is composed of an axis of abscissa representing the engine revolution NE and an axis of ordinate representing the final fuel injection amount QFIN. The two-dimensional map is set such that the target number of steps LSTRG corresponding to a point (NE, QFIN) in a two-dimensional plane ranges, for example, from 0 to 230. Although only curves corresponding to 0, 100 and 200 steps are plotted in the two-dimensional map as illustrated in Fig. 3b, the target number of steps LSTRG actually assumes a natural number that consecutively changes. The unit [mm$^3$/st] used in the graph indicates a fuel injection amount per one stroke of a piston.

The step motor 26 is controlled in accordance with a program executed by the ECU 39 such that the actual number of steps LSACT coincides with the target number of steps LSTRG. For example, the target number of steps LSTRG is a natural number which assumes zero when the intake throttle valve 25 is full open and increases as the intake throttle valve 25 is closed.

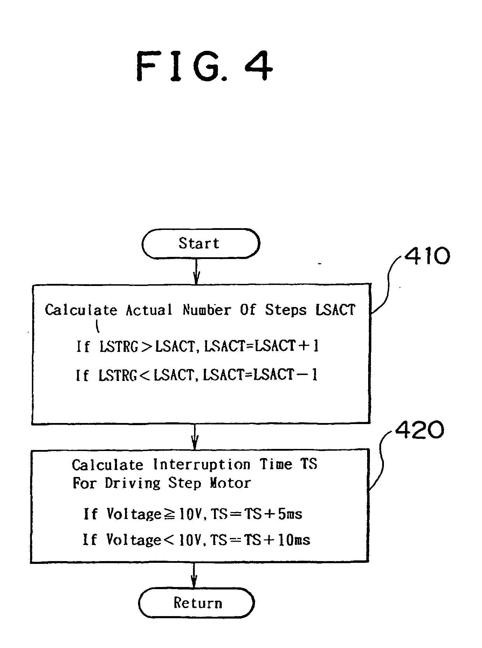

Fig. 4 is a flowchart of diesel intake throttle valve control. The program as illustrated in Fig. 4 is executed at a predetermined interruption interval. In step 410, the actual number of steps recognized by the ECU 39 is calculated. If the target number of steps LSTRG is larger than the actual number of steps LSACT, the actual number of steps LSACT is replaced by a value obtained by adding 1 to the current actual number of steps LSACT. If the target number of steps LSTRG is smaller than the actual number of steps LSACT, the actual number of steps LSACT is replaced by a value obtained by subtracting 1 from the current actual number of steps LSACT.

In step 420, an interruption time for executing the program as illustrated in Fig. 4 is calculated, for example, as follows. If a source voltage is not lower than 10V, a time TS is replaced by a value obtained by adding 5ms to the time TS. If the source voltage is lower than 10V, the time TS is replaced by a value obtained by adding 10ms to the time TS. Thus, as the source voltage becomes lower, the interval of interruption becomes longer.

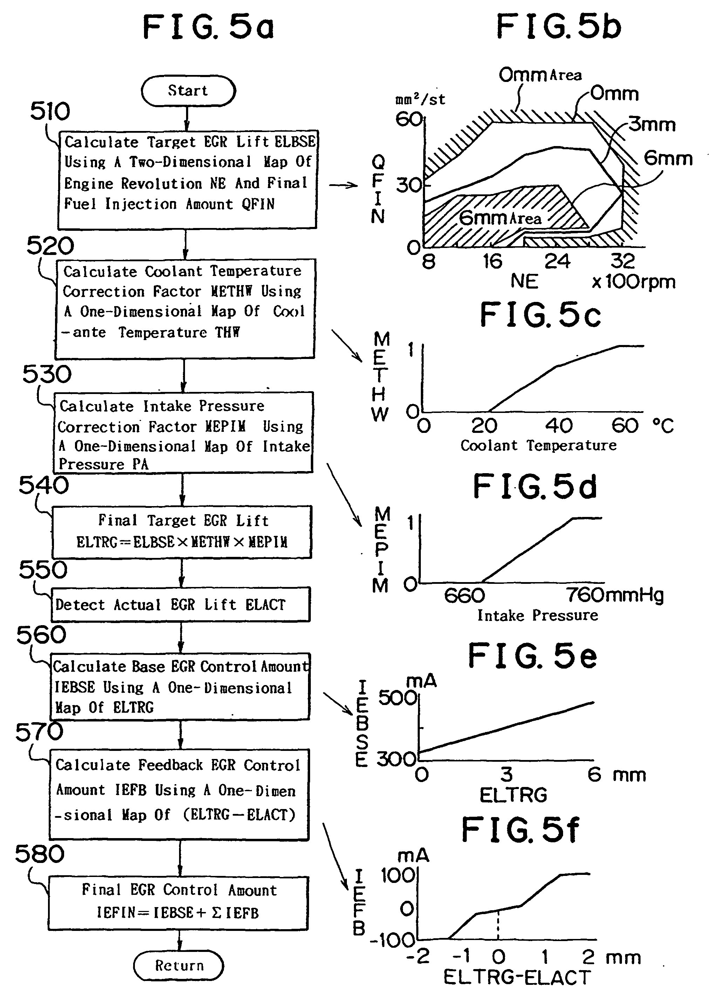

Fig. 5a is a flowchart of a program for EGR control. Figs. 5b through 5f are graphs showing relationships among various parameters used in the steps as illustrated in Fig. 5a. The program as illustrated in Fig. 5a is executed, for example, every 8ms.

In step 510, a base target EGR valve lift ELBSE, which constitutes a criterion of a lift amount of the EGR valve, is calculated from an engine revolution NE and a final fuel injection amount QFIN using a two-dimensional map as illustrated in Fig. 5b, which is composed of an axis of abscissa representing the engine revolution NE and an axis of ordinate representing the final fuel injection amount QFIN. The two-dimensional map is set such that the base target EGR valve lift ELBSE corresponding to a point (NE, QFIN) in a two-dimensional plane consecutively ranges, for example, from 0mm to 6mm. The engine revolution NE is obtained from an electric signal outputted from the rotational speed sensor 56. The final fuel injection amount QFIN is obtained from, for example, the following formula:

QFIN = min {f(engine revolution, accelerator opening degree), g(engine revolution, intake pressure, intake air temperature)},

where "min" represents a function assuming the smaller value quoted in the parenthesis, and "f" and "g" represent functions stored in, for example, the ROM of the ECU.

In step 520, a coolant temperature correction factor METHW is calculated from a coolant temperature THW using a one-dimensional map as illustrated in Fig. 5c, which is composed of an axis of abscissa representing the coolant temperature THW and an axis of ordinate representing the coolant temperature correction factor METHW. The one-dimensional map is set such that the coolant temperature correction factor METHW at a certain coolant temperature THW assumes, for example, a value ranging from 0 to 1. The coolant temperature THW is obtained from an electric signal outputted from the coolant temperature sensor 57.

In step 530, an intake pressure correction factor MEPIM is calculated from an intake pressure PA using a one-dimensional map as illustrated in Fig. 5d, which is composed of an axis of abscissa representing the intake pressure PA and an axis of ordinate representing the intake pressure correction factor MEPIM. The one-dimensional map is set such that the intake pressure correction factor MEPIM at a certain intake pressure PA assumes, for example, a value ranging from 0 to 1. The intake pressure PA is obtained from an electric signal outputted from the intake pressure sensor 59.

In step 540, a final target EGR valve lift ELTRG is calculated from the base target EGR valve lift ELBSE, the coolant temperature correction factor METHW and the intake pressure correction factor MEPIM using the following formula:

$$ELTRG = ELBSE \times METHW \times MEPIM$$

In step 550, an actual EGR valve lift ELACT corresponding to an actual lift amount of the EGR valve is detected using a sensor for detecting an actual lift amount of the EGR valve (EGR valve lift sensor).

In step 560, a base EGR control amount IEBSE is calculated from the final target EGR valve lift ELTRG using a one-dimensional map as illustrated in Fig. 5e, which is composed of an axis of abscissa representing the final target EGR valve lift ELTRG and an axis of ordinate representing the base EGR control amount IEBSE. The one-dimensional map is set such that the base EGR control amount IEBSE at a certain final target EGR valve lift ELTRG assumes, for example, a value ranging from about 300mA to about 500mA.

In step 570, a feedback EGR control amount IEFB is calculated from (the final target EGR valve lift ELTRG - the actual EGR valve lift ELACT) using a one-dimensional map as illustrated in Fig. 5f, which is composed of an axis of abscissa representing (the final target EGR valve lift ELTRG - the actual EGR valve lift ELACT) and an axis of ordinate representing the feedback EGR control amount IEFB. The one-dimensional map is set such that the feedback EGR control amount IEFB at a certain value of (the final target EGR valve lift ELTRG - the actual EGR valve lift ELACT) assumes, for example, a value ranging from about -100mA to about 100mA.

In step 580, a final EGR control amount IEFIN is calculated from the base EGR control amount IEBSE and the feedback EGR control amount IEFB using the following formula:

$$IEFIN = IEBSE + \Sigma IEFB.$$

The ECU 39 performs control such that a current corresponding to the final EGR control amount IEFIN flows through the EVRV 48.

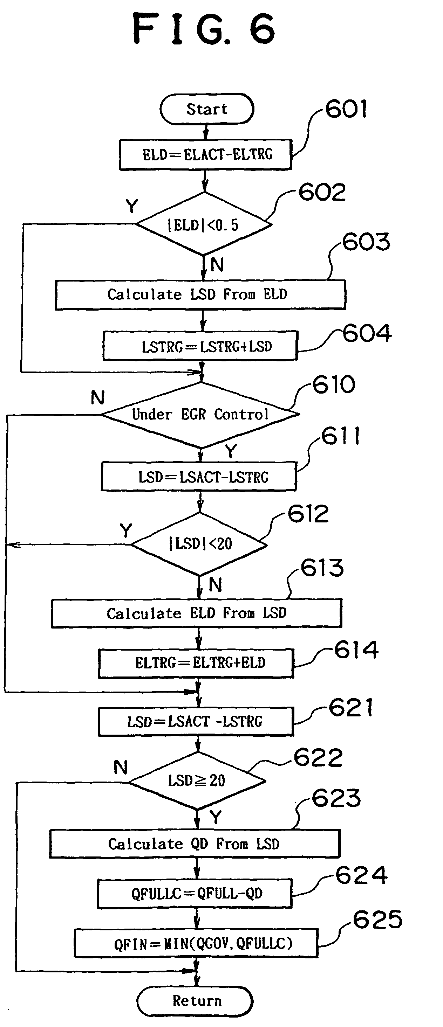

Fig. 6 is a flowchart of a program used in the intake throttle valve control apparatus for an engine with EGR control according to the present invention. The program as illustrated in Fig. 6 is executed, for example, every 8ms. That is, the control operation according to the program starts with the symbol "START" in Fig. 6 and ends with the symbol "RETURN" in Fig. 6. If the control operation proceeds to the symbol "RETURN", the program is not executed until the control operation proceeds to the symbol "START" again.

The flowchart as illustrated in Fig. 6 is roughly divided into three parts, namely, steps 601 to 604, steps 610 to 614 and steps 621 to 625. In steps 601 to 604, the opening degree of the intake throttle valve is corrected when the lift amount of the EGR valve deviates from a target value. In steps 610 to 614, the lift amount of the EGR valve is corrected when the opening degree of the intake throttle valve deviates from a target value, as it is disclosed in JP-082 101 95. In steps 621 to 625, the final fuel injection amount QFIN is corrected when the opening degree of the intake throttle valve deviates from a target value.

In step 601, an EGR valve lift difference ELD is calculated from the actual EGR valve lift ELACT and the final target EGR valve lift ELTRG using the following formula:

$$ELD = ELACT - ELTRG.$$

In this case, the millimeter is a unit of the variables ELACT, ELTRG and ELD.

In step 602, it is determined whether or not the absolute value of the EGR valve lift difference ELD is smaller than 0.5. If YES in step 602, the operation proceeds to step 610. If NO in step 602, the operation proceeds to step 603.

In step 603, an intake throttle valve opening degree correction amount LSD is calculated from the EGR valve lift difference ELD. This calculation is carried out based on a look-up table as illustrated in Table 1.

Table 1

| ELD | -6 | -3 | 0 | 3 | 6 |
|-----|-----|-----|-----|-----|-----|
| LSD | 10 | 5 | 0 | -30 | -60 |

The number of steps of the step motor for driving the intake throttle valve is a unit of the intake throttle valve opening degree correction amount LSD. Referring to Table 1, when the EGR valve lift difference ELD is positive (that is, when the actual EGR valve lift is larger than the final target EGR valve lift ELTRG), the intake throttle valve opening degree correction amount LSD is negative. On the contrary, when the EGR valve lift difference ELD is negative (that is, when the actual EGR valve lift ELACT is smaller than the final target EGR valve lift ELTRG), the intake throttle valve opening degree correction amount LSD is positive. In either case, the larger the EGR valve lift difference ELD becomes, the larger the absolute value of the intake throttle valve opening degree correction amount LSD becomes.

In step 604, the target number of steps LSTRG is corrected by adding thereto the intake throttle valve opening degree correction amount LSD. By using the target number of steps LSTRG corrected by the EGR valve lift difference ELD during intake throttle valve control, it is possible to perform cooperative control of the intake throttle valve control and the EGR valve. For example, when the EGR valve lift difference ELD is positive (that is, when the actual EGR valve lift ELACT is larger than the final target EGR valve lift ELTRG), the EGR operation is excessively performed. Thus, the EGR operation is restricted by opening the intake throttle valve. To be more specific, the opening degree of the intake throttle valve is increased by adding the intake throttle valve opening degree correction amount LSD of a negative value to the target number of steps LSTRG so as to reduce the target number of steps LSTRG. This control process according to the present invention makes it possible to prevent smoke from being generated and improve a state of combustion as well as drivability.

In step 610, it is determined whether or not the EGR operation is carried out. If YES in step 610, the operation proceeds to step 611. If NO in step 610, the operation proceeds to step 621. To be more specific, it is determined that the EGR operation is not carried out if the actual EGR valve lift ELACT is equal to zero, that is, if the EGR valve is completely closed.

Steps 611 to 614 correspond to steps 601 to 604 respectively. While the variable LSD is calculated from the variable ELD in steps 601 to 604, the variable ELD is calculated from the variable LSD in steps 611 to 614. In other words, while the opening degree of the intake throttle valve 25 is corrected in steps 601 to 604 when the lift amount of the EGR valve 42 deviates from a predetermined value, the lift amount of the EGR valve 42 is corrected in steps 611 to 614 when the opening degree of the intake throttle valve 25 deviates from a predetermined value.

In step 611, an intake throttle valve opening degree difference LSD is calculated from the actual number of steps LSACT and the target number of steps LSTRG using the following formula:

$$LSD = LSACT - LSTRG.$$

The number of steps of the step motor for driving the intake throttle valve is a unit of the variables LSACT and LSTRG.

In step 612, it is determined whether or not the absolute value of the intake throttle valve opening degree difference LSD is smaller than 20. If YES in step 612, the operation proceeds to step 621. If NO in step 612, the operation proceeds to step 613.

In step 613, an EGR valve lift correction amount ELD is calculated from the intake throttle valve opening degree difference LSD. This calculation is carried out based on a look-up table as illustrated in Table 2.

Table 2

| LSD | -60 | -30 | 0 | 30 | 60 |
|-----|-----|-----|-----|-----|-----|
| ELD | 6 | 3 | 0 | -0.5 | -1 |

The EGR valve lift correction amount ELD is expressed as a lift amount of the EGR valve in millimeter. Referring to Table 2, when the intake throttle valve opening degree difference LSD is positive (that is, when the actual number of steps LSACT is larger than the target number of steps LSTRG), the EGR valve lift correction amount ELD is negative. On the contrary, when the intake throttle valve opening degree difference LSD is negative (that is, when the actual number of steps LSACT is smaller than the target number of steps LSTRG), the EGR valve lift correction amount ELD is positive. In either case, the larger the absolute value of the intake throttle valve opening degree difference LSD becomes, the larger the absolute value of the EGR valve lift correction amount ELD becomes.

In step 614, the final target EGR valve lift ELTRG is corrected by adding thereto the EGR valve lift correction amount ELD. By using the final target EGR valve lift ELTRG corrected by the intake throttle valve opening degree difference LSD during EGR control, it is possible to perform cooperative control of the intake throttle valve and the EGR valve control. For example, when the intake throttle valve opening degree difference LSD is positive (that is, when the actual number of steps LSACT is larger than the target number of steps LSTRG), the intake throttle valve 25 is excessively throttled. Thus, the EGR operation is restricted by reducing a lift amount of the EGR valve 42. To be more specific, the lift amount of the EGR valve is reduced by adding the EGR valve lift correction amount ELD of a negative value to the final target EGR valve lift ELTRG so as to reduce the final target EGR valve lift ELTRG. This control process according to the present invention makes it possible to prevent smoke from being generated and improve a state of combustion as well as drivability.

In step 622, it is determined whether the intake throttle valve opening degree difference LSD is not smaller than 20. If the intake throttle valve opening degree difference LSD is not smaller than 20, the operation proceeds to step 623. If the intake throttle valve opening degree difference LSD is smaller than 20, the operation comes to an end.

In step 623, a fuel injection correction amount QD is calculated from the intake throttle valve opening degree difference LSD. This calculation is carried out based on a look-up table as illustrated in Table 3.

Table 3

| LSD | 0 | 20 | 40 | 60 | 80 |
|-----|---|----|----|----|----|
| LSD | 0 | 2 | 4 | 8 | 16 |

The fuel injection correction amount QD is expressed as a fuel injection amount [mm$^3$/st] per one stroke of the piston. Referring to Fig. 3, when the intake throttle valve opening degree difference LSD is positive (that is, when the actual number of steps LSACT is larger than the target number of steps LSTRG), the fuel injection correction amount QD is positive. In this case, the larger the intake throttle valve opening degree difference LSD becomes, the larger the fuel injection correction amount QD becomes.

In step 624, a maximum fuel injection amount QFULL in a full load state is corrected by subtracting therefrom the fuel injection correction amount QD. By using a maximum fuel injection amount QFULLC corrected by the intake throttle valve opening degree difference LSD during fuel injection control, it is possible to perform cooperative control of the intake throttle valve and fuel injection. For example, when the intake throttle valve opening degree difference LSD is positive (that is, when the actual number of steps LSACT is larger than the target number of steps LSTRG), the intake throttle valve 25 is excessively throttled. Thus, a later-described final fuel injection amount QFI is restricted by reducing the corrected maximum fuel injection amount QFULLC. To be more specific, the fuel injection amount is reduced by subtracting the fuel injection correction amount QD from the maximum fuel injection amount QFULL in a full load state so as to reduce the corrected maximum fuel injection amount QFULLC. This control process according to the present invention makes it possible to prevent smoke from being generated and improve a state of combustion as well as drivability.

In step 625, the smaller of a governor injection amount QGOV and the corrected maximum fuel injection amount QFULLC is determined as the final fuel injection amount QFIN and is used during fuel injection control. The governor injection amount QGOV is obtained from the engine revolution NE and a governor pattern that is preliminarily set so as to maintain the engine revolution NE in accordance with an accelerator opening degree (engine load).

The threshold values 0.5, 20 and 20 used in steps 602, 612 and 622 respectively may be changed depending on the object to be controlled or the control characteristics. It is further to be noted that the look-up tables 1 through 3 are given merely as examples and that the tables may contain additional pairs of values. Further, the correction amount may be obtained by interpolating the values cited in the tables.

Although the aforementioned programs used in the intake throttle valve control apparatus for an engine with EGR control according to the present invention are typically stored in the ROM 64 disposed inside the ECU 39, the present invention is not limited to such a construction. Functions of the aforementioned programs may also be implemented by a general purpose processor programmed based on instructions for causing the CPU 63 to carry out predetermined steps, a hardware element containing a wiring logic for carrying out predetermined steps or a general purpose processor programmed and combined with a specific hardware.

## Claims

1. An intake throttle valve control apparatus for an internal combustion engine (11) with EGR control for adjusting an amount of exhaust gas recirculation to a target value, including an EGR valve (42) for returning exhaust gas to the internal combustion engine, an intake throttle valve (25) disposed in an intake passage (16) and control means (39) for adjusting opening degrees of the EGR valve and the intake throttle valve to respective target values, **characterized in that** when the EGR valve (42) assumes an actual opening degree different from a desired opening degree by a predetermined value or more, the intake throttle valve control apparatus is adapted to perform a correction control such that the intake throttle valve assumes an opening degree different from a desired opening degree corresponding to an operating state of the internal combustion engine (11), wherein

the intake throttle valve (25) is adapted to assume an opening degree whose correction amount is increased in proportion with a difference between an actual opening degree of the EGR valve (42) and a desired opening degree of the EGR valve (42).

2. The intake throttle valve control apparatus according to claim 1, **characterized in that** the intake throttle valve control apparatus is adapted to perform a correction so as to increase an opening degree of the intake throttle valve (25) when the EGR valve (42) assumes an actual opening degree larger than a desired opening degree.

3. The intake throttle valve control apparatus according to claim 1, **characterized in that** the intake throttle valve control apparatus is adapted to determine a fuel injection amount in a full load state based on a difference between an actual opening degree of the intake throttle valve (25) and a desired opening degree of the intake throttle valve (25).

4. The intake throttle valve control apparatus according to claim 3, **characterized in that** the intake throttle valve control apparatus is adapted to perform a correction so as to reduce a fuel injection amount when the intake throttle valve (25) assumes an actual opening degree smaller than a desired opening degree.

5. The intake throttle valve control apparatus according to any of the preceding claims, **characterized in that** the EGR valve (42) is a diaphragm valve operating on negative pressure and atmospheric pressure so as to open and close an EGR passage (41)

6. The intake throttle valve control apparatus according to the preceding claims, **characterized in that** an electric vacuum regulating valve (48) is provided for adjusting a negative pressure and atmospheric pressure applied to the EGR valve (42).

**Patentansprüche**

1. Steuervorrichtung für die Drosselklappe einer Brennkraftmaschine (11) mit EGR Steuerung zur Einstellung einer Abgasrückführmenge auf einen Sollwert mit einem EGR Ventil (42) zur Rückführung von Abgas zur Brennkraftmaschine, einer in einem Ansaugkanal (16) angeordneten Drosselklappe (25) und einer Steuereinrichtung (39) zum Einstellen der Öffnungsgrade des EGR Ventils und der Drosselklappe auf entsprechende Sollwerte, **dadurch gekennzeichnet, dass**,
wenn das EGR Ventil (42) einen tatsächlichen, um einen bestimmten Wert oder mehr von einem angestrebten Öffnungsgrad unterschiedlichen Öffnungsgrad einnimmt, die Steuervorrichtung für die Drosselklappe in der Lage ist, eine Korrektursteuerung so vorzunehmen, dass die Drosselklappe einen von dem angestrebten Öffnungsgrad unterschiedlichen Öffnungsgrad entsprechend einem Betriebszustand der Brennkraftmaschine (11) einnimmt, wobei die Drosselklappe (25) in der Lage ist, einen Öffnungsgrad einzunehmen, dessen Korrekturbetrag proportional zu einer Differenz zwischen einem tatsächlichen Öffnungsgrad des EGR Ventils (42) und einem angestrebten Öffnungsgrad des EGR Ventils (42) erhöht wird.

2. Steuervorrichtung für die Drosselklappe nach Anspruch 1,
**dadurch gekennzeichnet, dass**
die Steuervorrichtung für die Drosselklappe in der Lage ist, eine Korrektur so durchzuführen, dass der Öffnungsgrad der Drosselklappe (25) erhöht wird, wenn das EGR Ventil (42) einen tatsächlichen Öffnungsgrad einnimmt, der größer als der angestrebte Öffnungsgrad ist.

3. Steuervorrichtung für die Drosselklappe nach Anspruch 1,
**dadurch gekennzeichnet, dass**
die Steuervorrichtung für die Drosselklappe in der Lage ist, eine Kraftstoffeinspritzmenge in einem Volllastzustand auf der Grundlage einer Differenz zwischen einem tatsächlichen Öffnungsgrad der Drosselklappe (25) und einem angestrebten Öffnungsgrad der Drosselklappe (25) zu bestimmen.

**4.** Steuervorrichtung für die Drosselklappe nach Anspruch 3,
**dadurch gekennzeichnet, dass**
die Steuervorrichtung in der Lage ist, eine Korrektur so vorzunehmen, dass die Kraftstoffeinspritzmenge vermindert wird, wenn die Drosselklappe (25) einen tatsächlichen Öffnungsgrad einnimmt, der kleiner als der angestrebte Öffnungsgrad ist.

**5.** Steuervorrichtung für die Drosselklappe nach einem der vorherigen Ansprüche,
**dadurch gekennzeichnet, dass**
das EGR Ventil als ein auf einen negativen Druck und einen atmosphärischen Druck ansprechendes Diaphragmaventil zum Öffnen und Schließen des EGR Kanals (41) ausgebildet ist.

**6.** Steuervorrichtung für die Drosselklappe nach einem der vorherigen Ansprüche,
**dadurch gekennzeichnet, dass**
ein elektrisches Vakuumregelventil (48) zum Einstellen eines auf das EGR Ventil (42) wirkenden negativen Drucks und eines atmosphärischen Drucks vorgesehen ist.

## Revendications

**1.** Appareil de commande de papillon des gaz d'admission pour un moteur à combustion interne (11) avec une commande EGR destinée à ajuster une quantité de recirculation des gaz d'échappement à une valeur cible, comprenant une soupape EGR (40) destinée à renvoyer les gaz d'échappement vers le moteur à combustion interne, un papillon des gaz d'admission (25) disposé dans un passage d'admission (16) et un moyen de commande (39) destiné à ajuster les degrés d'ouverture de la soupape EGR et du papillon des gaz d'admission aux valeurs cibles respectives, **caractérisé en ce que** lorsque la soupape EGR (42) prend un degré d'ouverture réelle différent du degré d'ouverture souhaité d'une valeur prédéterminée ou plus, l'appareil de commande de papillon des gaz d'admission est adapté pour réaliser une commande de correction d'une manière telle que le papillon des gaz d'admission prend un degré d'ouverture différent d'un degré d'ouverture souhaité correspondant à un état de fonctionnement du moteur à combustion interne (11), dans lequel

le papillon des gaz d'admission (25) est adapté pour prendre un degré d'ouverture dont la quantité de correction est augmentée proportionnellement à une différence entre un degré d'ouverture réel de la soupape EGR (42) et un degré d'ouverture souhaité de la soupape EGR (42).

**2.** Appareil de commande de papillon des gaz d'admission selon la revendication 1, **caractérisé en ce que** l'appareil de commande de papillon des gaz d'admission est adapté pour réaliser une correction de façon à augmenter un degré d'ouverture du papillon des gaz d'admission (25) lorsque la soupape EGR (42) prend un degré d'ouverture réel supérieur au degré d'ouverture souhaité.

**3.** Appareil de commande dé papillon des gaz d'admission selon la revendication 1, **caractérisé en ce que** l'appareil de commande de papillon des gaz d'admission est adapté pour déterminer une quantité d'injection de carburant dans un état de pleine charge en se basant sur une différence entre un degré d'ouverture réel du papillon des gaz d'admission (25) et un degré d'ouverture souhaité du papillon des gaz d'admission (25).

**4.** Appareil de commande de papillon des gaz d'admission selon la revendication 3, **caractérisé en ce que** l'appareil de commande de papillon des gaz d'admission est adapté pour réaliser une correction de façon à réduire une quantité d'injection de carburant lorsque le papillon des gaz d'admission (25) prend un degré d'ouverture réel inférieur à un degré d'ouverture souhaité.

**5.** Appareil de commande de papillon des gaz d'admission selon l'une quelconque des revendications précédentes, **caractérisé en ce que** la soupape EGR (42) est un clapet à disque fonctionnant sur pression négative et pression atmosphérique de façon à ouvrir et fermer un passage EGR (41).

**6.** Appareil de commande de papillon des gaz d'admission selon les revendications précédentes, **caractérisé en ce qu'**une soupape de régulation de vide électrique (48) est prévue pour ajuster une pression négative et une pression atmosphérique appliquée à la soupape EGR (42).

# FIG. 1

EP 0 887 532 B1

# FIG. 2

EP 0 887 532 B1

# F I G. 3a

```
                    ┌─────────────┐
                    │    Start    │
                    └──────┬──────┘
                           │                              ╭─310
   ┌───────────────────────▼─────────────────────┐
   │Calculate Target Number Of Steps LSTRG Using  │
   │A Two-Dimensional Map Of Engine Revolution NE │
   │And Fuel Injection Amount QFIN                 │
   └───────────────────────┬─────────────────────┘
                           │
                    ┌──────▼──────┐
                    │   Return    │
                    └─────────────┘
```

# F I G. 3b

# FIG. 4

```
                    ┌──────────────┐
                    │    Start     │
                    └──────┬───────┘
                           │                        ⌐410
    ┌──────────────────────┴───────────────────────┐
    │ Calculate Actual Number Of Steps LSACT        │
    │                                               │
    │     If  LSTRG > LSACT, LSACT=LSACT + 1         │
    │                                               │
    │     If  LSTRG < LSACT, LSACT=LSACT − 1         │
    │                                               │
    └──────────────────────┬───────────────────────┘
                           │                        ⌐420
    ┌──────────────────────┴───────────────────────┐
    │   Calculate Interruption Time TS              │
    │   For Driving Step Motor                      │
    │                                               │
    │     If  Voltage ≧ 10V, TS = TS + 5ms          │
    │                                               │
    │     If  Voltage < 10V, TS = TS + 10ms         │
    │                                               │
    └──────────────────────┬───────────────────────┘
                           │
                    ┌──────┴───────┐
                    │    Return    │
                    └──────────────┘
```

13

# FIG.5a

# FIG.5b

# FIG.5c

# FIG.5d

# FIG.5e

# FIG.5f

# F I G. 6

```
                    ( Start )            601

                 ELD=ELACT-ELTRG

            Y                            602
      ┌──────────<  |ELD|<0.5  >
      │                   │ N
      │                   ▼             603
      │        Calculate LSD From ELD
      │                   │
      │                   ▼             604
      │          LSTRG=LSTRG+LSD
      │                   │
      └──────────────────►│
                          │
         N                ▼             610
      ┌──────────< Under EGR Control >
      │                   │ Y
      │                   ▼             611
      │          LSD=LSACT-LSTRG
      │                   │
      │        Y          ▼             612
      │◄──────────<  |LSD|<20  >
      │                   │ N
      │                   ▼             613
      │        Calculate ELD From LSD
      │                   │
      │                   ▼             614
      │          ELTRG=ELTRG+ELD
      │                   │
      └──────────────────►│
                          ▼             621
                 LSD=LSACT -LSTRG
                          │
         N                ▼             622
      ┌──────────<   LSD≧20   >
      │                   │ Y
      │                   ▼             623
      │        Calculate QD From LSD
      │                   │
      │                   ▼             624
      │          QFULLC=QFULL-QD
      │                   │
      │                   ▼             625
      │        QFIN=MIN(QGOV,QFULLC)
      │                   │
      └──────────────────►│
                          ▼
                    ( Return )
```